# EUROPEAN PATENT APPLICATION

(11) **EP 4 462 580 A1**
(43) Date of publication of application: **13.11.2024**
(21) Application number: 23756511.4
(22) Date of filing: 05.01.2023
(51) Int. Cl.: H01M 50/383, H01M 50/204, H01M 50/224, H01M 10/658, H01M 10/655, H01M 10/6556, H01M 10/42

(54) **BATTERY PACK**

(30) Priority: 15.02.2022 KR 20220019796
(71) Applicant: LG Energy Solution, Ltd., Seoul 07335 (KR)
(72) Inventor: KIM, Ji Yong, Daejeon 34122 (KR); AHN, Hyung Jun, Daejeon 34122 (KR); LEE, Hui Jeong, Daejeon 34122 (KR); JIN, Hee Joon, Daejeon 34122 (KR)
(74) Representative: Plasseraud IP
(86) International application number: PCT/KR2023/000237
(87) International publication number: WO 2023/158098

(57) **Abstract**

The present invention relates to a battery pack, which prevents flame generated in the battery pack from being exposed to the outside, discharges smoke, gas, dust, and the like to the outside to reduce a risk of explosion, and delays chained ignition by extinguishing the flame by itself to improve safety of a product.

The battery pack according to the present invention includes a lower case having a plate shape, a plurality of battery modules disposed on the lower case, an upper case having a polyhedral shape without a bottom surface and coupled to the lower case while covering the battery modules, and a flame propagation prevention unit disposed inside the upper case so as to be spaced apart from a front surface of each of the battery modules, which is a surface of a side, at which an electrode terminal is disposed, thereby preventing flame generated in the battery module from being propagated, wherein the flame propagation prevention unit includes a blocking wall disposed to be spaced apart from an inner rear surface of the upper case, and a passage wall of which one end is connected to the blocking wall to extend in a direction away from the blocking wall and which is disposed to be spaced apart from an inner surface of the upper case.

## Description

### TECHNICAL FIELD

### CROSS-REFERENCE TO RELATED APPLICATION

The present application claims the benefit of the priority of Korean Patent Application No. 10-2022-0019796, filed on February 15, 2022, which is hereby incorporated by reference in its entirety.

### TECHNICAL FIELD

The present invention relates to a battery pack, and more particularly, to a battery pack of a secondary battery that is chargeable or dischargeable.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

As needs for a large-capacity structure have recently increased in addition to the use as an energy storage source, demand for a battery pack in which a plurality of secondary batteries or battery modules are gathered is increasing.

Since the battery pack is manufactured in the form in which a plurality of battery modules are concentrated in a small space, a large amount of heat may be generated in each battery module, and flame may be generated in the battery module due to the heat. In addition, there was a case in which the flame is spread to the outside.

Thus, for safety of consumers, needs for items of elements within satisfy UL1973 and whether UL1954A is satisfied have emerged.

However, the battery pack according to the related art has a problem in that flame stared from the battery module inside the battery pack is exposed to the outside, and thus, there is a problem in that it is difficult to prevent the generated flame from being spread to the outside.

In order to solve these problems, the flame generated in the battery pack may be prevented from being exposed to the outside while reducing possibility of explosion to prevent the flame from being spread in advance.

### DISCLOSURE OF THE INVENTION

### TECHNICAL PROBLEM

The present invention has been made to solve the above problems, and an object of the present invention is to provide a battery pack, which prevents flame generated in the battery pack from being exposed to the outside, discharges smoke, gas, dust, and the like to the outside to reduce a risk of explosion, and delays chained ignition by extinguishing the flame by itself to improve safety of a product.

### TECHNICAL SOLUTION

A battery pack according to the present invention includes: a lower case having a plate shape; a plurality of battery modules disposed on the lower case; an upper case having a polyhedral shape without a bottom surface and coupled to the lower case while covering the battery modules; and a flame propagation prevention unit disposed inside the upper case so as to be spaced apart from a front surface of each of the battery modules, which is a surface of a side, at which an electrode terminal is disposed, thereby preventing flame generated in the battery module from being propagated, wherein the flame propagation prevention unit includes: a blocking wall disposed to be spaced apart from an inner rear surface of the upper case; and a passage wall of which one end is connected to the blocking wall to extend in a direction away from the blocking wall and which is disposed to be spaced apart from an inner surface of the upper case.

The flame propagation prevention unit may further include: a plurality of first protrusion walls extending from the blocking wall toward the inner rear surface of the upper case so as not to be in contact with the inner rear surface of the upper case; and a plurality of second protrusion walls extending from the inner rear surface of the upper case toward the blocking wall so as not to be in contact with the blocking wall, wherein the first protrusion walls and the second protrusion walls may be alternately disposed.

The battery pack may further include: a horizontal partition wall having a plate shape extending in a longitudinal direction of the battery module and disposed between the battery modules to isolate the adjacent battery modules from each other; and a vertical partition wall having a plate shape extending in a width direction of the battery module and disposed to block a gap between the front surface of the battery module and an inner front surface of the upper case.

The horizontal partition wall and the vertical partition wall may meet each other perpendicularly.

The horizontal partition wall may include a steel material.

In the horizontal partition wall, a heat insulating sheet may be attached to a surface of the horizontal partition wall, which faces the battery module.

The heat insulating sheet may include mica.

The upper case may have a discharge hole that is continued to pass from the inner rear surface to an outer rear surface.

The battery pack may further include a water injection system disposed to pass from an outer front surface to an inner front surface of the upper case, wherein the water injection system may include a passage through which water is injected toward the battery module inside the upper case.

The battery pack may further include a battery management system disposed inside the upper case to inspect a state of the battery module.

The battery pack may further include a plate-shaped thermal interface material disposed between the lower case and the battery module.

### ADVANTAGEOUS EFFECTS

The battery pack according to the present invention may include the plate-shaped lower case, the plurality of battery modules disposed on the lower case, the upper case having the polyhedral shape without the bottom surface and coupled to the lower case while covering the battery modules, and the flame propagation prevention unit disposed inside the upper case so as to be spaced apart from the front surface of the battery module, which is the surface of the side, at which the electrode terminal is disposed, thereby preventing the flame generated in the battery module from being propagated, and the flame propagation prevention unit may include the blocking wall disposed to be spaced apart from the inner rear surface of the upper case, and the passage wall of which one end is connected to the blocking wall to extend in the direction away from the blocking wall and which is disposed to be spaced apart from the inner surface of the upper case.

Therefore, the present invention may provide the battery pack, which prevents the flame generated in the battery pack from being exposed to the outside, discharges the smoke, the gas, the dust, and the like to the outside to reduce the risk of the explosion, and delays the chained ignition by extinguishing the flame by itself to improve the safety of the product.

### BRIEF DESCRIPTION OF THE DRAWINGS

FIG. 1 is a schematic perspective view of a battery pack according to an embodiment of the present invention.
FIG. 2 is a schematic exploded perspective view illustrating the battery pack according to an embodiment of the present invention.
FIG. 3 is a schematic plan view of the battery pack according to an embodiment of the present invention.
FIG. 4 is a schematic rear enlarged perspective view of the battery pack according to an embodiment of the present invention.
FIG. 5 is a schematic perspective view illustrating an upper case of the battery pack according to an embodiment of the present invention.
FIG. 6 is a schematic plan view illustrating the upper case of the battery pack according to an embodiment of the present invention.
FIG. 7 is an enlarged view of a portion A of FIG. 5.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numbers are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

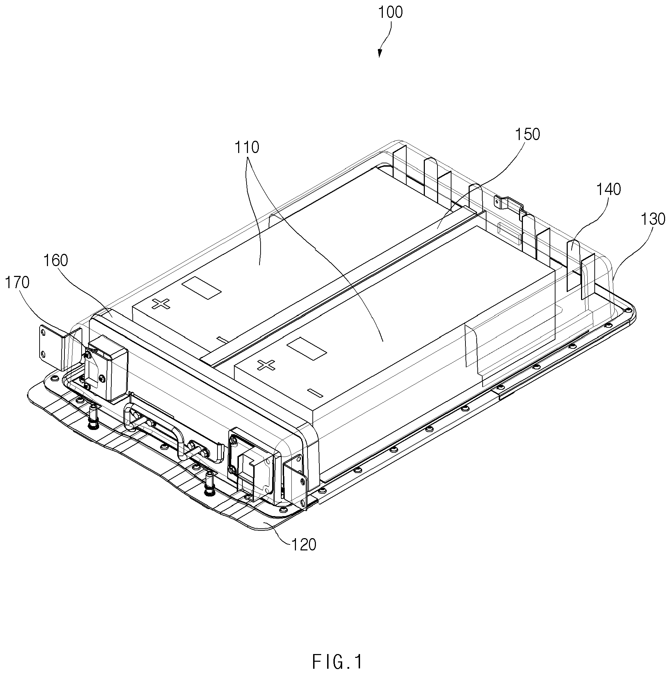

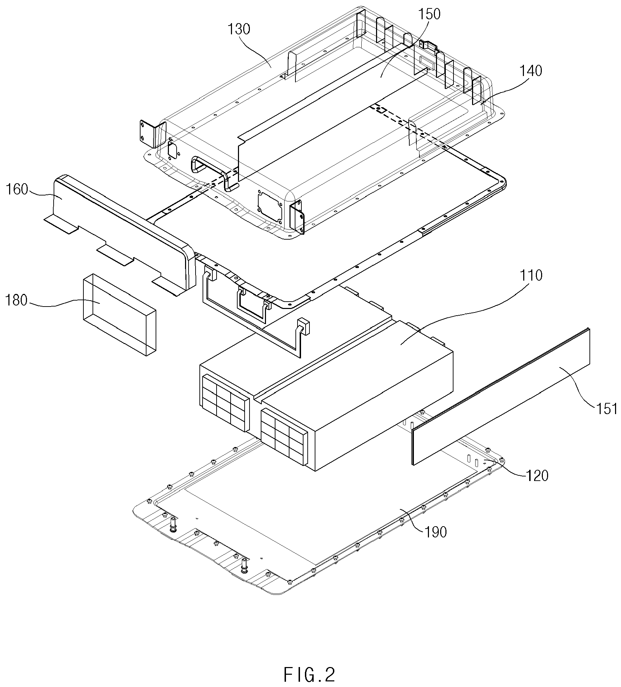

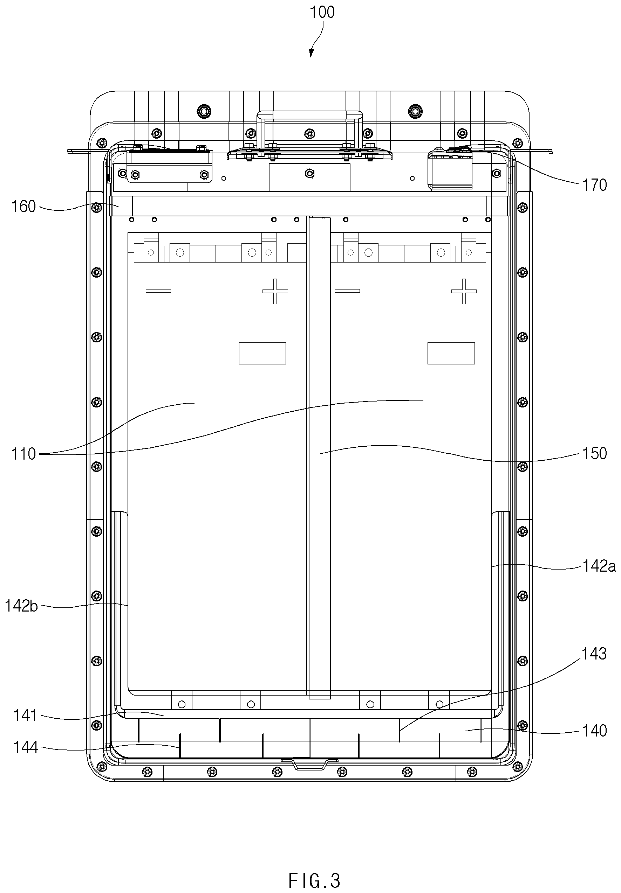

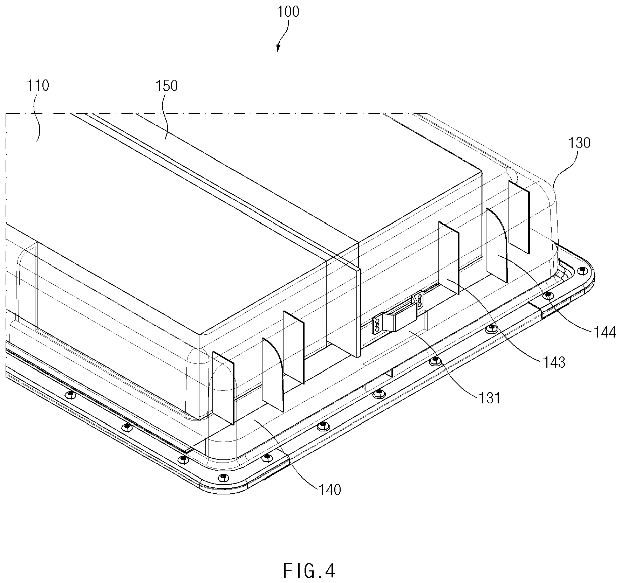

FIG. 1 is a schematic perspective view of a battery pack 100 according to an embodiment of the present invention, and FIG. 2 is a schematic exploded perspective view illustrating the battery pack 100 according to an embodiment of the present invention. FIG. 3 is a schematic plan view of the battery pack 100 according to an embodiment of the present invention, and FIG. 4 is a schematic rear enlarged perspective view of the battery pack 100 according to an embodiment of the present invention.

Referring to FIGS. 1 to 4, the battery pack 100 according to an embodiment of the present invention may include a battery module 110, a lower case 120, an upper case 130, and a flame propagation prevention unit 150 (e.g., flame arrestor) so as to prevent flame generated in the battery pack 100 from being propagated and spread to the outside.

The battery pack 100 according to an embodiment of the present invention may include a battery module 110 including two secondary batteries to generate electric energy through charging or discharging.

As an example of a configuration for disposing the battery module 110, the battery pack 100 according to an embodiment of the present invention may include the lower case 120.

The battery module 110 may be disposed on a top surface of the lower case 120. As described above, the battery pack 100 according to an embodiment of the present invention may include two battery modules 110. Thus, the two battery modules 110 may be disposed parallel to each other on the top surface of the lower case 120.

The lower case 120 may have a plate shape so that the battery module 110 is disposed on the lower case 120. The lower case 120 is sufficient as long as the battery module 110 is placed therein, and is not limited to the above-described shape.

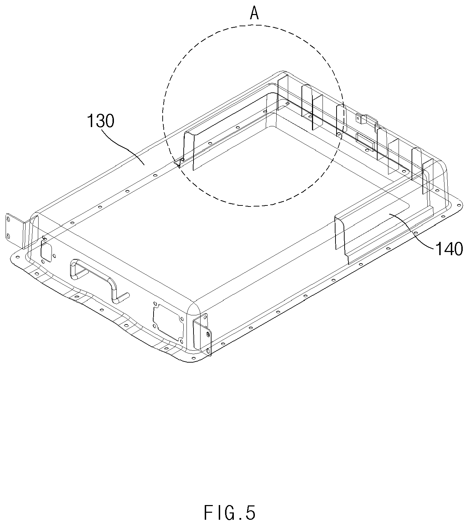

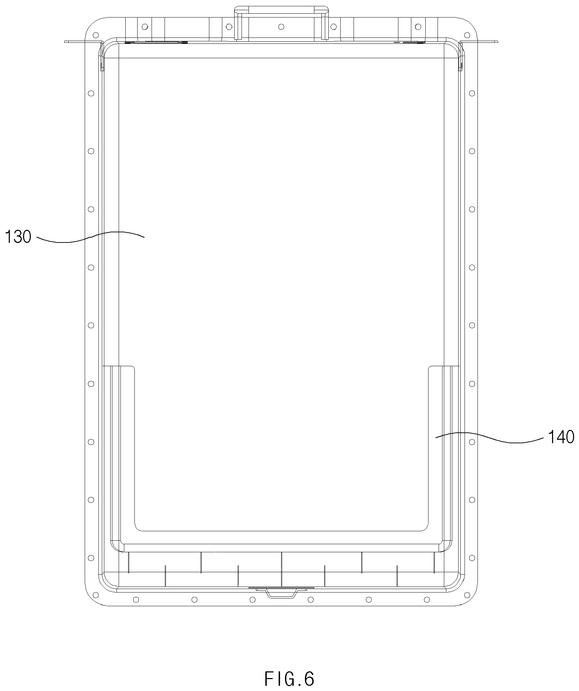

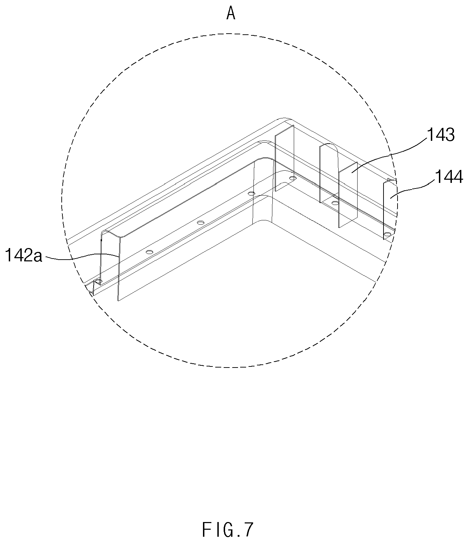

FIG. 5 is a schematic perspective view illustrating the upper case 130 of the battery pack 100 according to an embodiment of the present invention, and FIG. 6 is a schematic plan view illustrating the upper case 130 of the battery pack 100 according to an embodiment of the present invention. In addition, FIG. 7 is an enlarged view of a portion A of FIG. 5.

As an example of a configuration for preventing the flame generated in the battery module 110 from spreading to the outside, the battery pack 100 according to an embodiment of the present invention may include the upper case 130.

Referring to FIG. 5, the upper case 130 of the battery pack 100 according to an embodiment of the present invention may have a rectangular parallelepiped shape without a bottom surface. A shape of the upper case 130 is not limited thereto and may have a polyhedral shape.

The upper case 130 may be disposed outside the battery module 110 to cover the battery module 110 and be coupled to the lower case 120. Here, the upper case 130 and the lower case 120 may be coupled to each other in various manners, and the battery pack 100 may include an additional component such as a bolt for coupling the upper case 130 to the lower case 120.

In addition, the battery pack 100 may have an additional configuration disposed at a portion at which the upper case 130 and the lower case 120 are coupled to each other so as to seal the coupled portion when the upper case 130 and the lower case 120 are coupled to each other.

When the upper case 130 having a rectangular parallelepiped shape without a bottom surface is coupled to the lower case 120 on which the battery module 110 is disposed thereon, the battery module 110 may be disposed inside the upper case 130.

Thus, the battery module 110 disposed between the lower case 120 and the upper case 130 may be prevented from being in contact with the outside due to the coupling of the lower case 120 and the upper case 130, and the spread of the flame generated in the battery module 110 to the outside may be minimized.

As an example of a configuration for discharging smoke and dust generated by fire of the battery module 110 to the outside of the battery pack 100, the upper case 130 of the battery pack 100 according to an embodiment of the present invention may have a discharge hole 131.

The discharge hole 131 formed in the upper case 130 may be formed in a shape that is continued to pass from an inner rear surface to an outer rear surface of the upper case 130.

Although there is no restriction in cross-sectional shape of the discharge hole 131, the discharge hole 131 according to an embodiment of the present invention may have a rectangular cross-section. In addition, a horizontal length of the discharge hole 131 having the preferably rectangular cross-section may be less than a distance between a first protrusion wall 143 and a second protrusion wall 144, which will be described later.

Since the flame is reduced or extinguished through the flame propagation prevention unit 140, the smoke and dust may be discharged to the outside through the discharge hole 131 formed in the upper case 130. Thus, the discharge hole 131 may reduce the risk of explosion or the like occurring inside the battery pack 100.

As an example of a configuration capable of delaying the propagation of the flame generated in the battery module 110, the battery pack 100 according to an embodiment of the present invention may include the flame propagation prevention unit 140.

Referring to FIGS. 6 and 7, the flame propagation prevention unit 140 may include a blocking wall 141 and passage walls 142a and 142b.

The flame propagation prevention unit 140 of the battery pack 100 according to an embodiment may be disposed inside the upper case 130 in the state in which the upper case 130 is coupled to the lower case 120. Specifically, the flame propagation prevention unit 140 may be disposed closer to the inner rear surface than an inner front surface of the upper case 130.

The blocking wall 141 of the flame propagation prevention unit 140 may be disposed to be spaced apart from the inner rear surface of the upper case 130.

The blocking wall 141 may have a plate shape extending in a horizontal direction of the upper case 130, and the horizontal length of the blocking wall 141 may be less than a horizontal length of the upper case 130. In addition, a top surface of the blocking wall 141 is in contact with a top surface of the upper case 130, and a bottom surface of the blocking wall 141 is in contact with a bottom surface of the upper case 130 so that the blocking wall 141 is disposed so as not to generate a gap in an upper or lower portion of the blocking wall 141.

There is no limitation in thickness of the blocking wall 141, and the blocking wall 141 may be made of a material with high heat resistance due to fire.

The passage walls 142a and 142b of the flame propagation prevention unit 140 may have one end connected to the blocking wall 141 to extend in a direction away from the blocking wall 141 and may be spaced apart from the inner surface of the upper case 130. Preferably, the passage walls 142a and 142b may be disposed parallel to the inner surface of the upper case 130 having a rectangular shape.

The flame propagation prevention unit 140 according to an embodiment of the present invention may include two passage walls 142a and 142b. That is, the two passage walls 142a and 142b may be spaced apart from each other on two inner surfaces formed on both left and right sides of the upper case 130.

Each of the passage walls 142a and 142b may have a plate shape extending in a longitudinal direction of the upper case 130, and a length of the passage walls 142a and 142b extending in the direction away from the blocking wall 141 may be less than a longitudinal length of the blocking wall 141. In addition, a top surface of each of the passage walls 142a and 142b may be in contact with a top surface of the upper case 130, and a bottom surface of each of the passage walls 142a and 142b, may be in contact with a bottom surface of the upper case 130 so as not to generate a gap in an upper or lower portion of each of the passage walls 142a and 142b.

A passage through which the flame, smoke, and dust generated from the battery module 110 move may be formed by the passage walls 142a and 142b and bottom, top, and inner surfaces of the upper case 130. The flame, smoke, and dust moving through the passage formed in this manner may move to a space formed by the blocking wall 141 and the bottom surface, the top surface, and the inner rear surface of the upper case 130.

There is no restriction in thickness of each of the passage walls 142a and 142b, and each of the passage walls 142a and 142b may be made of a material with high heat resistance due to the fire.

As an example of a configuration for reducing the flame generated in the battery module 110, the flame propagation prevention unit 140 of the battery pack 100 according to an embodiment of the present invention may further include a first protrusion wall 143 and a second protrusion wall 144.

The first protrusion wall 143 of the flame propagation prevention unit 140 may have a shape that extends from the blocking wall 141 toward the inner rear surface of the upper case 130 so as not to be in contact with the inner rear surface of the upper case 130, and the second protrusion wall 144 of the flame propagation prevention unit 140 may have a shape that extends from the inner rear surface of the upper case 130 toward the blocking wall 141 so as not to be in contact with the blocking wall 141. In addition, a plurality of first protrusion walls 143 and second protrusion walls 144 may be formed and may be alternately disposed.

The flame propagation prevention unit 140 may form a space having a winding shape when viewed from the top by the plurality of first protrusion walls 143 and second protrusion walls 144, which are disposed alternately. The flame generated in the battery module 110 may become weaker as moving through this space.

Each of the first protrusion wall 143 and the second protrusion wall 144 may have a plate shape extending in the longitudinal direction of the upper case 130, and an extending length of each of the first protrusion wall 143 and the second protrusion wall 144 may be less than a distance between the blocking wall 141 and the rear inner surface of the upper case 130. In addition, a top surface of the first protrusion wall 143 and the second protrusion wall 144 may be in contact with a top surface of the upper case 130, and a bottom surface of the first protrusion wall 143 and the second protrusion wall 144 may be in contact with a bottom surface of the upper case 130 so as not to generate a gap in an upper or lower portion of the first protrusion wall 143 and the second protrusion wall 144.

The flame propagation prevention unit 140 of the battery pack 100 according to an embodiment of the present invention may include the first protrusion wall 143 and the second protrusion wall 144 to weaken and extinguish the flame generated in the battery module 110 in a process of moving through the space formed by the first protrusion wall 143 and the second protrusion wall 144, thereby preventing the flame from being spread to the outside.

As an example of a configuration for preventing the flame from being propagated between the battery modules 110, the battery pack 100 according to an embodiment of the present invention may further include a horizontal partition wall 150 and a vertical partition wall 160.

The horizontal partition wall 150 may extend to be in contact with the vertical partition wall 160 and the blocking wall 141 of the flame propagation prevention unit 140 and may be disposed between the battery modules 110 so that the adjacent battery modules 110 are isolated from each other. The horizontal partition wall 150 according to an embodiment of the present invention may be disposed parallel to the battery modules 110 that are disposed in parallel.

The horizontal partition wall 150 may have a plate shape extending in the longitudinal direction of the battery module 110. A shape of the horizontal partition wall 150 is not limited thereto and may have any shape capable of blocking the battery modules 110 adjacent to each other between the battery modules 110.

As an example of a configuration for not being deformed when the fire occurs in the battery module 110, the horizontal partition wall 150 of the battery pack 100 according to an embodiment of the present invention may include a steel material.

Even when the fire occurs in the battery module 110, in order to prevent the fire from being spread to the other adjacent battery module 110, the horizontal partition wall 150 may include a steel material having high heat resistance, preferably a steel material.

Even if the fire occurs in the battery module 110, the horizontal partition wall 150 made of the steel may not be physically deformed to prevent the fire from being spread.

As an example of a configuration for preventing heat from being spread when the fire occurs in the battery module 110, the horizontal partition wall 150 of the battery pack 100 according to an embodiment of the present invention may be attached to a heat insulating sheet 151.

The heat insulating sheet 151 may be attached to a surface of the horizontal partition wall 150, which faces the battery module 110. Thus, the heat insulating sheet 151 may be attached to both surfaces or one surface of the horizontal partition wall 150, which faces the battery module 110.

The heat insulating sheet 151 may have a thin plate shape to be easily attached to the surface of the horizontal partition wall 150.

Since the heat insulating sheet 151 is attached to the horizontal partition wall 150, even when a fire occurs in the battery module 110, the heat may be prevented from being spread to the other adjacent battery module 110. In addition, the heat released from the battery module 110 may be prevented from being spread to the other battery module 110 to prevent the fire from occurring in advance.

The heat insulating sheet 151 according to an embodiment of the present invention may include mica. Preferably, the heat insulating sheet 151 may be made of mica.

Since mica has excellent fire resistance and heat insulation properties, when the fire occurs in the battery module 110, the heat insulating sheet 151 containing mica may withstand the fire without burning and may prevent the heat from being spread to the adjacent battery module 110.

The vertical partition wall 160 may extend to be in contact with both inner surfaces of the upper case 130 and may be disposed to block a gap between the front surface of the battery module 110 and the inner surface of the upper case 130. That is, the vertical partition wall 160 according to an embodiment of the present invention may be disposed to be perpendicular to the battery modules 110 that are disposed in parallel.

Thus, the horizontal partition wall 150 and the vertical partition wall 160 according to an embodiment of the present invention may meet each other perpendicularly. The horizontal partition wall 150 and the vertical partition wall 160, which meet each other perpendicularly, may be efficiently prevented from being in contact with the outside to efficiently block the adjacent battery modules 110 from each other. That is, the possibility of propagation of the flame generated in the battery module 110 may be reduced.

The vertical partition wall 160 may have a plate shape extending in a width direction of the battery module 110. The shape of the vertical partition wall 160 is not limited thereto and may have any shape capable of blocking the battery module 110 from the outside.

As an example of a configuration for early extinguishing the fire occurring in the battery module 110, the battery pack 100 according to an embodiment of the present invention may further include a water injection system 170.

The water injection system 170 may be disposed to pass from an outer front surface to an inner front surface of the upper case 130. In addition, the water injection system 170 capable of being disposed in this manner may include a passage through which water is injected toward the battery module 110 disposed inside the upper case 130.

Since the water injection system 170 has to be able to inject the water toward the battery module 110 inside the upper case 130 when the fire occurs in the battery module 110, a system for automatically injecting the water in the event of the fire may be provided and may be connected to a configuration capable of receiving the water for injection.

The battery pack 100 may further include the water injection system 170, and thus, when the fire occurs in the battery module 110, water may be injected through the passage of the water injection system 170, and also, the fire may be extinguished early before the fire is grown to prevent the fire from being spread.

As an example of a configuration for confirming problems such as the fire and the heat, which occur in the battery module 110, the battery pack 100 according to an embodiment of the present invention may further include a battery management system 180.

The battery management system 180 may be disposed inside the upper case 130 and may include components such as a display capable of indicating a state of the battery pack 100.

The battery management system 180 may check various states of the battery pack 100. Specifically, the battery management system 180 may monitor a voltage, current, and a temperature of the battery to maintain the voltage, the current, and the temperature of the battery in optimal states. In addition, a lifespan of the battery pack 100 may extend by predicting a battery replacement time and detecting problems in advance. In addition, overheating due to temperature abnormality, overvoltage, and overcurrent charging inside the battery pack 100 may be detected in advance.

The battery pack 100 may further include the battery management system 180 to detect the occurrence of the fire, thereby responding to the occurrence of the fire in advance.

As an example of a configuration for reducing heat generated in the battery module 110, the battery pack 100 according to an embodiment of the present invention may further include a thermal interface material 190.

The thermal interface material 190 may be disposed between the lower case 120 and the battery module 110. That is, the lower case 120, the thermal interface material 190, and the battery module 110 may be disposed in order from a lower side.

Here, although not specifically shown in the embodiment of the present invention, the battery pack 100 may include a heat sink, a cooling plate, and the like under the thermal interface material 190 to remove heat transmitted through the thermal interface material 190.

The thermal interface material 190 may serve to minimize contact thermal resistance. That is, since an amount of heat transferred to the heat sink, the cooling plate, or the like increases, the heat generated in the battery module 110 may be efficiently removed.

The thermal interface material 190 may be mainly made of a material having high thermal conductivity.

The battery pack 100 may further include the thermal interface material 190 to prevent heat from being spread between the battery modules 110 and to efficiently remove heat generated in the battery module 110, thereby reducing the risk of fire.

The battery pack 100 according to the present invention may prevent the flame generated in the battery pack from being exposed to the outside, discharge the smoke, the gas, the dust, and the like to the outside to reduce the risk of the explosion, and delay the chained ignition by extinguishing the flame by itself to improve safety of a product.

Hereinafter, a form in which specific components of the battery pack 100 are disposed will be described according to another embodiment in which the number of battery modules 110 is different. In addition, detailed descriptions of the same configuration as the battery pack 100 according to an embodiment of the present invention will be omitted.

A battery pack 100 according to another embodiment of the present invention may include three battery modules 110.

The three battery modules 110 may be disposed side by side on an upper portion of a lower case 120 according to this embodiment, and a horizontal partition wall 150 may be disposed between the two battery modules 110 and the remaining one battery module 110.

Therefore, flame generated by the two battery modules 110 may move into a flame propagation prevention unit 140 through one passage wall 142a, and flame generated in remaining one battery module 110 may be movable into the flame propagation prevention unit 140 through the other passage wall 142b.

The battery pack 100 according to another embodiment of the present invention may include four battery modules 110.

The four battery modules 110 may be disposed side by side on an upper portion of a lower case 120 according to this embodiment, and a horizontal partition wall 150 may be disposed between the two battery modules 110 and the remaining two battery modules 110.

Therefore, flame generated by the two battery modules 110 may move into the flame propagation prevention unit 140 through one passage wall 142a, and flame generated in the remaining two battery modules 110 may be movable into the flame propagation prevention unit 140 through the other passage wall 142b.

While the embodiments of the present invention have been described with reference to the specific embodiments, it will be apparent to those skilled in the art that various changes and modifications may be made without departing from the spirit and scope of the invention as defined in the following claims.

[Description of the Symbols]

- 100:: Battery pack
- 110:: Battery module
- 120:: Lower case
- 130:: Upper case
- 131:: Discharge hole
- 140:: Flame propagation prevention unit
- 141:: Blocking wall
- 142a, 142b:: Passage wall
- 143:: First protrusion wall
- 144:: Second protrusion wall
- 150:: Horizontal partition wall
- 151:: Heat insulating sheet
- 160:: Vertical partition wall
- 170:: Water injection system
- 180:: Battery management system
- 190:: Thermal interface material

## Claims

1. A battery pack comprising:
a lower case having a plate shape;
a plurality of battery modules disposed on the lower case;
an upper case having a polyhedral shape without a bottom surface and coupled to the lower case while covering the battery modules; and
a flame propagation prevention unit disposed inside the upper case so as to be spaced apart from a front surface of each of the battery modules, which is a surface of a side, at which an electrode terminal is disposed, thereby preventing flame generated in the battery module from being propagated,
wherein the flame propagation prevention unit comprises:
a blocking wall disposed to be spaced apart from an inner rear surface of the upper case; and
a passage wall of which one end is connected to the blocking wall to extend in a direction away from the blocking wall and which is disposed to be spaced apart from an inner surface of the upper case.

2. The battery pack of claim 1, wherein the flame propagation prevention unit further comprises:
a plurality of first protrusion walls extending from the blocking wall toward the inner rear surface of the upper case so as not to be in contact with the inner rear surface of the upper case; and
a plurality of second protrusion walls extending from the inner rear surface of the upper case toward the blocking wall so as not to be in contact with the blocking wall,
wherein the first protrusion walls and the second protrusion walls are alternately disposed.

3. The battery pack of claim 1, further comprising:
a horizontal partition wall having a plate shape extending in a longitudinal direction of the battery module and disposed between the battery modules to isolate the adjacent battery modules from each other; and
a vertical partition wall having a plate shape extending in a width direction of the battery module and disposed to block a gap between the front surface of the battery module and an inner front surface of the upper case.

4. The battery pack of claim 3, wherein the horizontal partition wall and the vertical partition wall meet each other perpendicularly.

5. The battery pack of claim 3, wherein the horizontal partition wall comprises a steel material.

6. The battery pack of claim 3, wherein, in the horizontal partition wall, a heat insulating sheet is attached to a surface of the horizontal partition wall, which faces the battery module.

7. The battery pack of claim 6, wherein the heat insulating sheet comprises mica.

8. The battery pack of claim 1, wherein the upper case has a discharge hole that is continued to pass from the inner rear surface to an outer rear surface.

9. The battery pack of claim 1, further comprising a water injection system disposed to pass from an outer front surface to an inner front surface of the upper case,
wherein the water injection system comprises a passage through which water is injected toward the battery module inside the upper case.

10. The battery pack of claim 1, further comprising a battery management system disposed inside the upper case to inspect a state of the battery module.

11. The battery pack of claim 1, further comprising a plate-shaped thermal interface material disposed between the lower case and the battery module.
